# EUROPÄISCHE PATENTSCHRIFT

(11) **EP 3 608 066 B1**
(45) Veröffentlichungstag und Bekanntmachung des Hinweises auf die Patenterteilung: **07.06.2023**
(21) Anmeldenummer: 18189340.5
(22) Anmeldetag: 16.08.2018
(51) Int. Cl.: B25J 9/16, B25J 15/02, B25J 9/14

(54) **VERFAHREN ZUM ÜBERWACHEN DER FUNKTIONSWEISE EINER GREIFZANGE SOWIE GREIFZANGE**
METHOD FOR MONITORING THE FUNCTIONALITY OF GRIPPER JAWS AND GRIPPER JAWS
PROCÉDÉ DE SURVEILLANCE DE FONCTIONNEMENT D'UNE PINCE DE PRÉHENSION ET PINCE DE PRÉHENSION

(30) Priorität: 10.08.2018 DE 102018119509
(43) Veröffentlichungstag der Anmeldung: 12.02.2020
(73) Patentinhaber: FIPA Holding GmbH, 85737 Ismaning (DE)
(72) Erfinder: STOLZE, Michael, 85656 Buch am Buchrain (DE); Dr. BLOMEYER, Niels, 82319 Starnberg (DE)
(74) Vertreter: Meissner Bolte Partnerschaft mbB

(56) Entgegenhaltungen:
- EP-A2- 2 572 840
- CN-U- 207 318 034
- DE-A1-102015 213 402
- US-A1- 2014 201 571
- William Mcmahan ET AL: "Spectral Subtraction of Robot Motion Noise for Improved Event Detection in Tactile Acceleration Signals" In: "Advances in Databases and Information Systems", 1 January 2012 (2012-01-01), Springer International Publishing, Cham 032682, XP055558795, ISBN: 978-3-319-10403-4 vol. 7282, pages 326-337, DOI: 10.1007/978-3-642-31401-8_30, * abstract * * figure 1 * * Abschnitte 1 und 3 *

## Beschreibung

Die vorliegende Erfindung betrifft ein Verfahren zum Überwachen der Funktionsweise einer Greifzange, insbesondere einer pneumatisch betätigten Greifzange gemäß dem Oberbegriff von Anspruch 1, sowie eine entsprechende Greifzange. Bei dem hierin berücksichtigten Greifer handelt es sich insbesondere um einen pneumatisch betätigten Greifer, wobei der Greifer ein Gehäuse aufweist, in welchem ein vorzugsweise pneumatisch betätigbarer Linearantrieb ausgebildet ist. Der Greifer weist eine erste und eine zweite Greifbacke auf, die jeweils um eine Drehachse relativ zu dem Gehäuse verschwenkbar gelagert sind. Die erste und zweite Greifbacke sind mit dem Linearantrieb derart gekoppelt, dass eine mit dem Linearantrieb erzeugte Linearbewegung in eine Verschwenkbewegung jeweils der ersten und zweiten Greifbacke in einer Öffnungs- oder Schließrichtung der Greifbacken umgewandelt wird.

Ein derartiger Greifer ist dem Prinzip nach aus dem Stand der Technik bekannt.

Als Beispiel hierfür sei die Druckschrift DE 198 55 630 B4 genannt, die einen pneumatisch betätigten Greifer der eingangs genannten Art betrifft.

Derartige Greifer werden häufig im Zusammenhang mit Industrierobotern zum Handhaben verschiedenartiger Gegenstände eingesetzt. Üblicherweise weist der Greifer zwei zangenförmig gegeneinander verschwenkbare oder längs geeigneter Führungen linear gegeneinander verschiebbare starre Backen auf, die einen zu greifenden Gegenstand mit einander zugewandten Greiferflächen von entgegengesetzten Seiten her erfassen und einspannen.

Damit der Gegenstand einerseits sicher zwischen den Greifbacken festgehalten und andererseits beim Einspannen nicht beschädigt wird, ist eine maximale Zuverlässigkeit des Greifers unumgänglich. Andererseits sollen derartige Greifer, die gelegentlich auch als "Greifzangen" bezeichnet werden, eine kompakte Bauform und im Verhältnis zu einer hohen Greifkraft ein möglichst geringes Gewicht aufweisen, damit sie insbesondere auch in der Robotertechnik als Robotergreifwerkzeug vielseitig eingesetzt werden können.

Damit der Gegenstand einerseits sicher zwischen den Greifbacken des Greifers festgehalten und andererseits beim Einspannen nicht beschädigt wird, ist eine maximale Zuverlässigkeit des Greifers unumgänglich. Andererseits sollen derartige Greifer, die gelegentlich auch als "Greifzangen" bezeichnet werden, eine kompakte Bauform und im Verhältnis zu einer hohen Greifkraft ein möglichst geringes Gewicht aufweisen, damit sie insbesondere auch in der Robotertechnik als Robotergreifwerkzeug vielseitig eingesetzt werden können.

Die Druckschrift EP 2 572 840 A2 betrifft eine Vorrichtung zum Aufschneiden von einem Lebensmittelprodukt mit einer durch einen Antrieb antreibbaren Schneideinrichtung, insbesondere mit einem rotierenden Schneidmesser, einer Produktzufuhr, die das Lebensmittelprodukt der Schneideinrichtung zuführt, und einer Aufnahmeeinrichtung, die ausgelegt ist, Lebensmittelscheiben aufzunehmen, die von dem Lebensmittelprodukt abgeschnitten werden.

Die Druckschrift US 2014/201571 A1 betrifft ein System zur Betriebsüberwachung und Fehler-Diagnose.

Die Druckschrift DE 10 2015 213 402 A1 betrifft ein Greifersystem mit einem insbesondere pneumatisch betätigten Greifer und einem System zum Erfassen, ob ein Werkstück von dem Greifer gegriffen wurde. Um auf externe Verkabelungen verzichten zu können, ist dabei vorgesehen, dass das Erfassungssystem als pneumatisches Erfassungssystem ausgebildet ist. Hierzu weist das Erfassungssystem einen Vakuum- oder Druckluftkanal mit einer Mündungsöffnung auf, wobei die Mündungsöffnung hinsichtlich das Greifers derart angeordnet oder ausgebildet ist, dass die Mündungsöffnung zumindest bereichsweise verschlossen ist, wenn von dem Greifer ein Werkstück gegriffen wurde.

Die Druckschrift WILLIAM MCMAHAN ET AL: "Spectral Subtraction of Robot Motion Noise for Improved Event Detection in Tactile Acceleration Signals", in: "Advances in Databases and Information Systems", 1. Januar 2012, Springer International Publishing, Cham 032682, XP055558795, ISBN:978-3-319-10403-4, BD.7282, Seiten 326-337, DOI: 10.1107/978-3-642-31401-8_30, betrifft die Optimierung von Vibrations-Feedbacksystemen für die Teleoperation sowie die Messung von hochfrequenten taktilen Beschleunigungen bei Roboterplattformen. Hierzu wird ein Signalverarbeitungsansatz vorgeschlagen, der die menschliche Neuropsychologie wiederspiegelt.

Der Erfindung liegt die Aufgabe zugrunde, einen Greifer der eingangs genannten Art dahingehend weiterzubilden, dass dieser trotz eines einfachen Aufbaus besonders zuverlässig Gegenstände greifen kann. Insbesondere soll ein Greifer bereitgestellt werden, bei dem in einer einfach zu realisierenden Weise stets sichergestellt ist, dass die Greifbacke nach einem vorab festgelegten oder festlegbaren Ereignisablauf in eine Öffnungs- und Schließrichtung verschwenkt werden können.

Diese Aufgabe wird erfindungsgemäß durch ein Verfahren zum Überwachen der Funktionsweise einer Greifzange gelöst, wie es im unabhängigen Patentanspruch 1 angegeben ist.

Ferner wird die Aufgabe durch den Gegenstand des nebengeordneten Patentanspruchs 11 gelöst.

Demgemäß betrifft die Erfindung insbesondere ein Verfahren zum Überwachen der Funktionsweise einer Greifzange, insbesondere einer pneumatisch betätigten Greifzange, wobei mit Hilfe mindestens einer Schwingungsmessung über eine vorab festgelegte oder festlegbare Zeitperiode ein Schwingungsspektrum der Greifzange als Beschleunigungszeitsignal aufgenommen und das aufgenommene Schwingungsspektrum analysiert wird.

Mit der erfindungsgemäßen Lösung ist es in zuverlässiger Weise möglich, potenzielle Abweichungen der Funktionsweise des Greifers, wenn die Greifbacken des Greifers in eine Öffnungs- und/oder Schließrichtung verschwenkt werden, zu erkennen, und automatisch entsprechend zu reagieren, um der Abweichung entgegenzuwirken. Die erfindungsgemäße Lösung ermöglicht es, potenzielle Fehlfunktionen der Greifzange, die einen negativen Einfluss auf den Greifvorgang haben bzw. haben können, möglichst frühzeitig zu erkennen. Nach Erkennen von potenziellen Fehlfunktionen können automatisch Gegenmaßnahmen initiiert werden, mit welchen eine Abweichung möglichst frühzeitig kompensiert werden.

Potenzielle Abweichungen der Funktionsweise der überwachten Greifzange werden durch einen Beschleunigungssensor, der an einer Greifbacke der Greifzange angeordnet oder in der Greifbacke initiiert ist, detektiert und Abweichungen werden entweder über Fehlermeldungen an den Kunden bzw. den Betreiber der Greifzange, über eine Remote-Control-Schnittstelle an die Herstellerfirma bzw. an den zuständigen Fernwartungsservice übermittelt.

Dabei liegt der Erfindung die Erkenntnis zugrunde, dass in einem Fall, wenn beispielsweise durch mechanischen Verschleiß der Greiferkomponenten oder durch unbeabsichtigten Druckverlust aufgrund einer Leckage sich das charakteristische Schwingungsspektrum der Greifzange beim Betätigen der Greifzange ändert und von einem idealen Schwingungsspektrum (Soll-Schwingungsspektrum) abweicht. Der Grad der Änderung bzw. der Grad der Abweichung von dem Soll-Schwingungsspektrum dient dann als Indiz für eine fehlerhafte Funktionsweise der Greifzange und/oder einen ungewollten Druckverlust durch Leckage.

Abhängig von der Art der Abweichung kann automatisch mindestens einer der nachfolgenden Schritte ausgewählt und ausgeführt werden:
i) es wird regelnd auf die Ansteuerung der Greifzange eingewirkt, um potenzielle Druckverluste durch Leckagen entgegenzuwirken; und/oder
ii) es wird über eine optische und/oder akustische Schnittstelle eine Fehlermeldung ausgegeben; und/oder es wird über eine Remote-Control-Schnittstelle der Greifzange eine Meldung an eine Fernwartungsstelle ausgegeben.

Bei der Analyse des aufgenommenen Schwingungsspektrums wird gemäß Ausführungsformen der vorliegenden Erfindung zunächst die Art der Abweichung des aufgenommenen Schwingungsspektrums von einem vorgegebenen (idealen) Schwingungsspektrum bestimmt. Auf diese Weise kann ein Rückschluss auf die Ursache für die Abweichung des aufgenommenen Schwingungsspektrums bzw. ein Rückschluss auf die Abweichung des Soll-Schwingungsspektrums getroffen werden.

Anschließend kann festgestellt werden, ob die über die Schwingungsmessung erfasste Abweichung zu einer Änderung der Performance der Greifzange führen kann. Wenn dies der Fall sein sollte, wird geprüft, ob eine Möglichkeit besteht, regelnd auf die Ansteuerung der Greifzange einzuwirken, um die potenzielle Änderung der Performance kompensieren zu können.

Gleichzeitig oder alternativ hierzu wird in Abhängigkeit von der ermittelten Ursache für die Abweichung des Ist-Schwingungsspektrums, d.h. des aufgenommenen Schwingungsspektrums, von dem Soll-Schwingungsspektrum, d.h. dem idealen Schwingungsspektrum, eine optische und/oder akustische Fehlermeldung oder dergleichen Nachricht an den Betreiber der Greifzange ausgegeben, so dass dieser entsprechende Maßnahmen unternehmen kann.

Wird hingegen bestimmt, dass zur Behebung der Fehlerquelle die Unterstützung von externem Servicepersonal erforderlich ist, wird von einem Steuersystem vorzugsweise automatisch über eine Remote-Control-Schnittstelle eine entsprechende Fehlermeldung an eine Fernwartungsstelle ausgegeben. Dies kann beispielsweise dann der Fall sein, wenn ein mechanischer Verschleiß von Komponenten der Greifzangen oder ein fehlerhafter Einbau der Greifzangen bzw. Komponenten der Greifzangen oder eine Undichtigkeit in dem Pneumatiksystem zur Ansteuerung der Greifzange die Ursache für die Abweichung des aufgenommenen Schwingungsspektrums ist.

Die Fernwartung (Remote Maintenance) von Greifzangen gewinnt beim Support der Hard- und Software von Greifzangenherstellern zunehmend an Bedeutung. Durch die immer stärkere Vernetzung der Steuersysteme von Robotern und Greifzangen über das Internet, den Aufbau von firmeninternen Intranets und herkömmliche Telekommunikationswege (ISDN, Telefon) erweitern sich die Möglichkeiten der direkten Unterstützung im Support. Nicht zuletzt wegen der Einsparmöglichkeiten bei Reisekosten und die bessere Ressourcennutzung (Personal und Technik) werden Produkte der Fernwartung zur Kostensenkung in Unternehmen genutzt. Fernwartungsprogramme ermöglichen es dem entfernt sitzenden Servicetechniker, direkt auf die überwachte Greifzange zuzugreifen und deren Status abzufragen, um vorausschauende Gegenmaßnahmen, wie beispielsweise Wartungsintervalle einzuplanen und durchzuführen.

Im Folgenden wird die Erfindung mit Bezug auf die beiliegenden Zeichnungen näher beschrieben.

In den Zeichnungen zeigen:
- FIG. 1: eine Draufsicht auf eine exemplarische Ausführungsform des erfindungsgemäßen Greifers;
- FIG. 2: eine Längsschnittansicht des Greifers gemäß FIG. 1;
- FIG. 3A: ein Schwingungsspektrum des erfindungsgemäßen Greifers bei einem Ansteuerdruck von 6 bar (Ist-Wert);
- FIG. 3B: ein Schwingungsspektrum des erfindungsgemäßen Greifers bei einem Ansteuerdruck von 4 bar (Ist-Wert); und
- FIG. 4A-C: Schwingungsspektren der Greifzange in unterschiedlichen Zuständen der Greifzange (jeweils bei gleichem Ansteuerdruck).

Nachfolgend werden unter Bezugnahme auf die beiliegenden Zeichnungen der Aufbau und die Funktionsweise einer exemplarischen Ausführungsform der erfindungsgemäßen Greifzange 1 näher beschrieben. Bei dieser exemplarischen Ausführungsform ist die Greifzange 1 als eine pneumatisch betätigte Greifzange ausgeführt; die Art der Betätigung der Greifzange 1 ist allerdings nicht als einschränkend auszulegen.

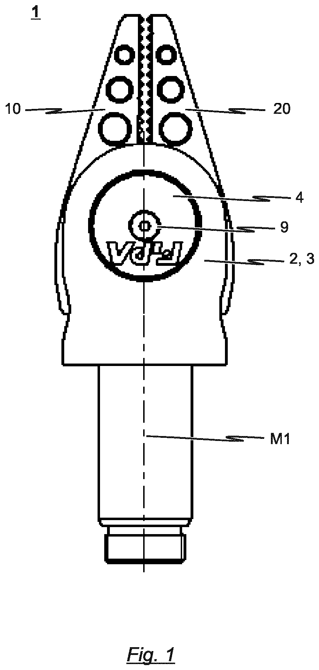

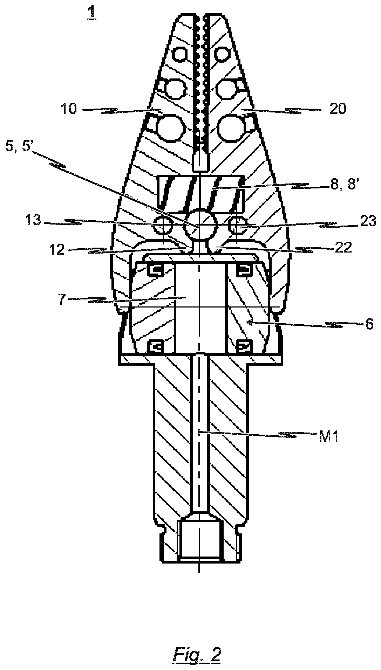

Wie es insbesondere den Darstellungen in den Figuren 1 und 2 entnommen werden kann, weist die Greifzange 1 ein Gehäuse 2 auf, in welchem ein Linearantrieb ausgebildet ist. Bei der exemplarischen Ausführungsform das Gehäuse 2 maulförmig ausgebildet und weist eine obere sowie eine untere Gehäuseseite 3, 3' auf. Zwischen diesen beiden Gehäuseseiten 3, 3' sind insgesamt zwei Greifbacken 10, 20 der Greifzange 1 verschwenkbar aufgenommen.

Die beiden Greifbacken 10, 20 sind hinsichtlich einer Mitten-Längsachse M1 der Greifzange 1 spiegelsymmetrisch ausgebildet. Die Verschwenkbarkeit der beiden Greifbacken 10, 20 relativ zu dem Gehäuse 2 wird bei der dargestellten exemplarischen Ausführungsform mit Hilfe von zwei Drehzapfen 13, 23 realisiert, die die Drehachsen D1, D2 der beiden Greifbacken 10, 20 definieren.

Damit die Greifbacken 10, 20 relativ zu dem Gehäuse 2 um die mit den Drehzapfen 13, 23 definierten Drehachsen D1, D2 verschwenkt werden können, ist in dem Gehäuse 2 ein Linearantrieb 6 ausgebildet. Bei Betätigung des Linearantriebs 6 erzeugt dieser eine in Längsrichtung der Greifzange 1 wirkende Linearkraft, die in die beiden Greifbacken 10, 20 eingeleitet und in eine Verschwenkbewegung umgewandelt wird.

Bei der dargestellten exemplarischen Ausführungsform kommt ein pneumatisch betätigbarer Linearantrieb 6 zum Einsatz. Im Einzelnen weist der Linearantrieb 6 einen durch ein pneumatisches Druckmittel beaufschlagbaren Arbeitsraum 7 auf. Durch Druckmittelbeaufschlagung des Arbeitsraumes 7 findet eine Ausdehnung des Arbeitsraumes 7 in Längsrichtung der Greifzange 1 statt. Diese Längsausdehnung erzeugt eine Linearkraft zum Verschwenken der beiden Greifbacken 10, 20.

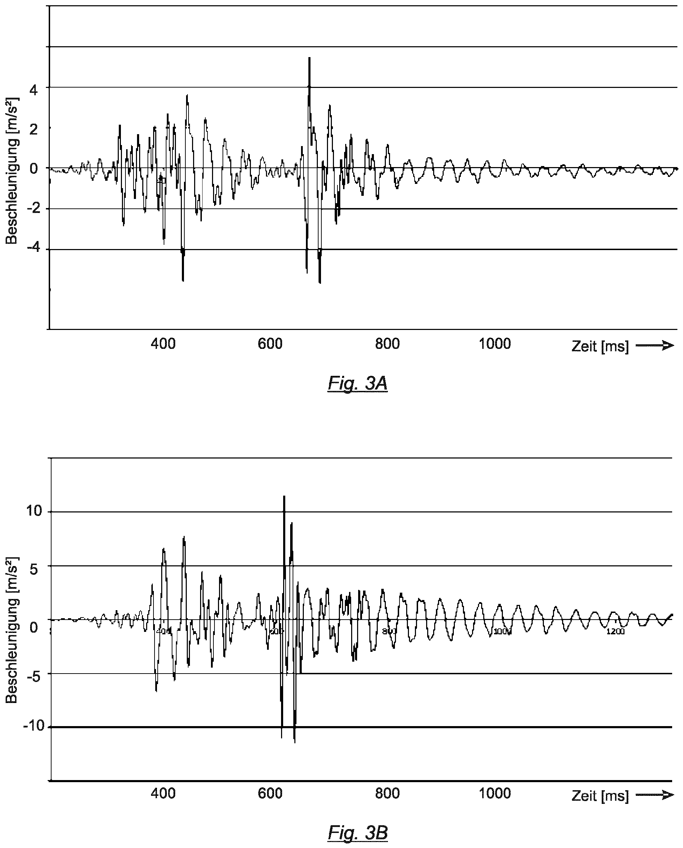

Im Einzelnen wird die von dem Linearantrieb 6 erzeugte Linearkraft jeweils über einen Vorsprung 12, 22 in die entsprechende Greifbacke 10, 20 eingeleitet. Die beiden Vorsprünge 12, 22 der ersten und zweiten Greifbacke 10, 20 sind exzentrisch zu der entsprechenden Drehachse D1, D2 der Greifbacke 10, 20 ausgebildet und zeigen in Richtung des Linearantriebs 6, wie es insbesondere der Darstellung in Fig. 2 oder Fig. 3 entnommen werden kann. Über diese Vorsprünge 12, 20 wird die bei Betätigung des Linearantriebs 6 erzeugte Linearkraft in die entsprechenden Greifbacken 10, 20 eingeleitet.

Der Darstellung in Fig. 2 ist ferner zu entnehmen, dass die beiden an den jeweiligen Greifbacken 10, 20 ausgebildeten Vorsprünge 12, 22, zumindest in dem Bereich, in dem von dem Linearantrieb 6 Kräfte in die Greifbacken 10, 20 einleitbar sind, abgerundet ausgebildet sind.

Bei der exemplarischen Ausführungsform der erfindungsgemäßen Greifzange 1 kommt ferner ein Rückstellelement 8 in Gestalt einer Druckfeder 8' zum Einsatz, die in Fig. 2 schematisch dargestellt ist. Diese Druckfeder 8' ist mit ihrem ersten Ende mit der ersten Greifbacke 10 und mit ihrem zweiten Ende mit der zweiten Greifbacke 20 verbunden, so dass die beiden Greifbacken 10, 20 in ihre Öffnungsrichtung bewegt werden, wenn keine Linearkraft durch den Linearantrieb 6 in die Greifbacken 10, 20 eingeleitet wird.

Um bei der exemplarischen Ausführungsform der erfindungsgemäßen Greifzange 1 die Bewegung der beiden Greifbacken 10, 30 synchronisieren zu können, und um insbesondere auch eine Selbstzentrierung der Greifbacken 10, 20 zu ermöglichen, kommt ein Synchronisationselement 5 zum Einsatz, über welches die beiden Greifbacken 10, 20 gekoppelt sind. Im Einzelnen ist bei der exemplarischen Ausführungsform der erfindungsgemäßen Greifzange 1 das Synchronisationselement 5 als ein kreiszylinderförmiges Teil 5' ausgebildet, dessen Längsachse L1 parallel zu den Drehachsen D1, D2 der ersten und zweiten Greifbacken 10, 20 verläuft. Wie es insbesondere der Darstellung in Fig. 2 entnommen werden kann, schneidet die Längsachse L1 des kreiszylinderförmigen Teils 5' die Mitten-Längsachse M1 der Greifzange 1 senkrecht.

Die erfindungsgemäße Greifzange 1 zeichnet sich dadurch aus, dass diese mit einem System zur Schwingungsmessung ausgerüstet ist. Dieses System weist einen Beschleunigungssensor 30 auf, welcher ausgelegt ist, die Beschleunigung einer Greifbacke 10, 20 beim Betätigen der Greifzange 1 zu messen. Dies erfolgt vorzugsweise, indem die auf die Masse der Greifzange 1 wirkende Trägheitskraft bestimmt wird.

Als Beschleunigungssensor 30 kommt insbesondere ein MEMS-Sensor zum Einsatz, welcher in der Greifbacke 10, 20 der Greifzange 1 vorzugsweise integral ausgebildet bzw. integriert ist. Alternativ hierzu ist es selbstverständlich aber auch denkbar, den Beschleunigungssensor 30 an der Greifbacke 10, 20 andersartig zu befestigen bzw. anzuordnen.

Der Beschleunigungssensor 30, welcher in FIG. 1 nur schematisch dargestellt ist, ist vorzugsweise ein ein- oder mehrachsiger Miniatur-Beschleunigungssensor 30 auf MEMS-Basis, der in die Greifbacke 10, 20 der Greifzange integriert, wie beispielsweise eingegossen, ist. Der Sensor 30 ist charakterisiert durch einen oder mehrere schmalbandige Frequenzbereiche, die zur Greifzangen-Diagnose herangezogen werden.

Das Überwachungssystem weist ferner eine Auswerteeinrichtung 40 auf, welche ausgebildet ist, das von dem Beschleunigungssensor 30 beim Betätigen der Greifzange 1 aufgenommene Schwingungsspektrum, bei welchem es sich um ein Beschleunigungszeitsignal handelt, entsprechend auszuwerten. Zu diesem Zweck ist die Auswerteeinrichtung 40 ausgebildet, das von der Greifzange 1 aufgenommene Schwingungsspektrum entweder in Echtzeit oder bei Bedarf auf dem Beschleunigungssensor 30 bzw. einer zum Beschleunigungssensor 30 gehörenden Speichereinrichtung vorzugsweise drahtlos auszulesen. Hierfür kommen verschiedene Technologien zum Einsatz, wie beispielsweise die RFID-Technologie, Bluetooth, WiFi, NFC, Funk, etc.

Selbstverständlich ist es aber auch denkbar, die Auswerteeinrichtung 40 in Gestalt einer Smartphone-App umzusetzen, welche per WiFi, Bluetooth, NFC, etc. das von dem Beschleunigungssensor 30 aufgenommene Beschleunigungszeitsignal empfängt und anschließend analysiert.

So findet die Überwachung der Funktionsweise der Greifzange 1 über eine Schwingungsmessung während einer Zeitperiode statt, in welcher die Greifzange 1 mindestens einmal geschlossen wird. Dann handelt es sich bei dem von dem Beschleunigungssensor 30 aufgenommenen Schwingungsspektrum um ein für den Schließvorgang der Greifzange 1 charakteristisches Spektrum.

Hierbei liegt der vorliegenden Erfindung die Erkenntnis zugrunde, dass sich das den Betätigungsvorgang der Greifzange 1 charakteristische Spektrum bei zunehmendem Verschleiß der Greifzange 1 ändert, wobei die Änderungen in dem Schwingungsspektrum herangezogen werden, um eine Aussage über einen potenziellen zukünftigen Ausfall der Greifzange 1 möglichst präzise voraussagen zu können, um vor dem Ausfall der Greifzange 1 eine entsprechende Wartung der Greifzange 1 oder ein Austausch der Komponente einplanen zu können.

Das erfindungsgemäße Überwachungssystem zeichnet sich insbesondere dadurch aus, nicht nur einen insbesondere schleichenden Verschleiß der Greifzange 1 oder Komponenten hiervon zu erfassen, sondern auch zu prüfen, ob ein bei Betätigung der Greifzange 1 an der Greifzange 1 anliegender Betätigungsdruck einem vorab festgelegten oder festlegbaren Soll-Wert entspricht. Auch dies ist aus dem charakteristischem Schwingungsspektrum der Greifzange 1 bei dessen Betätigung ableitbar.

Beispielsweise zeigt FIG. 3A das charakteristische Schwingungsspektrum einer exemplarischen Ausführungsform der erfindungsgemäßen Greifzange 1 bei einem an der Greifzange 1 anliegenden Betätigungsdruck (Ist-Wert) von 6 bar. Im Vergleich hierzu zeigt FIG. 3B das charakteristische Schwingungsspektrum der Greifzange 1 bei einem bei Betätigung der Greifzange 1 anliegenden Betätigungsdruck (Ist-Wert) von 4 bar.

Der Vergleich der beiden Schwingungsspektren zeigt, dass bei einem Betätigungsdruck (Ist-Wert) von 6 bar die Greifbacken etwas später geschlossen sind, als bei einem Betätigungsdruck von 4 bar. Abgesehen hiervon treten bei einem Betätigungsdruck von 6 bar vor dem Schließen der Greifbacke 10, 20 stärkere Schwingungen auf, was sich anhand der Amplituden in dem Zeitfenster zwischen 200 bis 600 ms zeigt. Insbesondere reagieren bei einem Betätigungsdruck von 6 bar die Greifbacken der Greifzange 1 früher im Vergleich zu einem niedrigen Betätigungsdruck.

Anhand dieser Informationen kann - nach geeigneter Eichung - an der Greifzange 1 der tatsächlich anliegende Ist-Wert des Betätigungsdruckes beim Betätigen der Greifzange 1 geprüft werden. Auf diese Weise sind potenzielle Druckverluste in dem Leitungssystem zur Greifzange 1 identifizierbar. Vorausgesetzt hierfür ist, dass der ursprünglich in das Leitungssystem eingespeiste Betätigungsdruck bekannt ist.

Mit anderen Worten, wenn ein Druck von beispielsweise 6 bar in das zu der Greifzange 1 führenden Leitungssystem eingespeist wird und bei Betätigung der Greifzange 1 ein Schwingungsspektrum aufgenommen wird, welches in etwa dem Schwingungsspektrum gemäß FIG. 3B entspricht, ist davon auszugehen, dass der an der Greifzange 1 anliegende Ist-Wert des Betätigungsdruckes deutlich niedriger als der ursprünglich eingereichte Betätigungsdruck ist.

Indem über eine längere Zeitperiode ein entsprechendes Schwingungsprofil bei einem bekannten ursprünglich eingespeisten Wert des Betätigungsdruckes aufgenommen und verglichen werden, ist ein schleichender Druckverlust erfassbar.

Ein solcher schleichender Druckverlust kann beispielsweise durch Leckagen in dem Leitungssystem, durch Leckagen an der Anbindung der Greifzange 1 an das Leitungssystem und/oder durch Leckagen in dem pneumatischen Antrieb der Greifzange 1 hervorgerufen werden.

In diesem Zusammenhang ist es beispielsweise denkbar, dass regelmäßig, insbesondere an vorab festgelegten oder festlegbaren Zeitpunkten, ein entsprechendes Schwingungsprofil der Greifzange 1 bei einem bekannten Wert eines eingespeisten Druckes aufgenommen wird, um so sicherzustellen, dass die Greifzange 1 stets mit dem vorgesehenen Ist-Wert des Betätigungsdruckes betätigt wird.

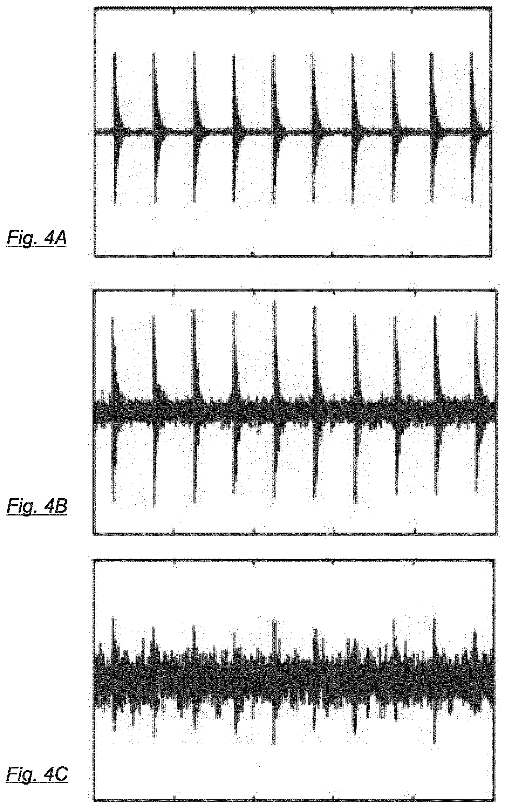

Andererseits eignet sich das erfindungsgemäße Überwachungssystem auch dazu, einen Verschleiß der Greifzange 1 zu erfassen, der losgelöst von einem etwaigen Leckageverlust ist. In diesem Zusammenhang wird auf die Darstellungen in den FIG. 4A bis 4C verwiesen.

Im Einzelnen zeigt FIG. 4A das Beschleunigungszeitsignal einer Greifzange 1 im neuen Zustand. Das in FIG. 4A gezeigte Beschleunigungszeitsignal zeigt das Schwingungsspektrum, welches bei insgesamt elf Betätigungen der Greifzange 1 aufgenommen wird.

Charakteristisch an diesem Beschleunigungszeitsignal sind trennscharfe Signalpeaks mit geringem Flächeninhalt, was auf einen schnellen, reibungsarmen und kraftschlüssigen Schließ-/Öffnungsvorgang zurückzuführen ist.

Bei beginnendem Verschleiß beispielsweise des Linearantriebs der Greifzange 1 oder der Dichtungen nimmt der Flächeninhalt der Signalpeaks zu und die Amplitudenhöhe steigt an, wobei zwischen den einzelnen Signalpeaks sich ein zusätzlicher "Schwingungsteppich" ausbreitet, wie es dem Beschleunigungszeitsignal gemäß FIG. 4B entnommen werden kann.

Mit fortgeschrittenem Verschleiß (kurz vor Ausfall) nimmt der Flächeninhalt der Signalpeaks weiter zu (deutlich mehr Energieinhalt) und die Amplitundenhöhe steigt weiter an, wobei das Amplitundenniveau des "Schwingungsteppichs" signifikant ansteigt, wie es dem Beschleunigungszeitsignal gemäß FIG. 4C entnommen werden kann.

In besonders bevorzugter Weise ist das Überwachungssystem ausgebildet, bei Inbetriebnahme, insbesondere bei der erstmaligen Inbetriebnahme der Greifzange 1, in einem Lernmodus das charakteristische Schwingungsprofil beim Öffnen und/oder Schließen der Greifzange 1 aufzunehmen. Dieses im Lernmodus aufgenommene Schwingungsprofil wird insbesondere bei unterschiedlichen Ist-Werten eines an der Greifzange 1 angreifenden Betätigungsdruckes aufgenommen und in einer Speichereinheit der Auswerteeinrichtung 40 abgelegt.

Anschließend werden anhand der im Lernmodus aufgenommenen Schwingungsprofile entsprechende Alarmschwellen festgelegt. Diese Alarmschwellen betreffen insbesondere eine Scheitelhöhe mindestens eines bei einem Schließ- und/oder Öffnungsvorgangs der Greifzange 1 im Schwingungsspektrum auftretenden Signalpeaks und/oder eine Fläche unter mindestens eines bei einem Schließ- und/oder Öffnungsvorganges der Greifzange 1 im Schwingungsspektrum aufgenommenen Signalpeaks und/oder die Fläche unter einem vorab festgelegten oder festlegbaren Bereich eines bei einem Schließ- und/oder Öffnungsvorganges der Greifzange 1 im Schwingungsspektrum auftretenden Grundrauschens.

Hierbei wird vorzugsweise nur ein bestimmter Bereich, und insbesondere ein vorab festgelegter oder festlegbarer Bereich im Schwingungsspektrum zur Auswertung und insbesondere zur Festlegung der Alarmschwellen verwendet. Insbesondere bietet es sich hierbei an, die Signalpeaks zur Festlegung der Alarmschwellen und zur späteren Auswertung der später aufgenommenen Schwingungsprofile zu wählen, die auftreten, wenn die Greifbacken der Greifzange 1 sich im Schließvorgang berühren.

Eine andere charakteristische Zeitperiode wären beispielsweise die ersten 200 ms nach Aktivierung/Betätigung der Greifzange 1, was ebenfalls ein charakteristisches Grundrauschen zeigt.

Die vorliegende Erfindung ermöglicht eine produktionsnahe Instandhaltung von Greifzangen, und zwar indem eine zustandsorientierte Instandhaltung möglich wird. Durch intelligente Datenanalyse in der Auswerteeinrichtung 40 werden in den Schwingungsspektren auffällige Muster identifiziert, die auf eine Störung hinweisen. So können präventive Maßnahmen ergriffen und Ausfälle vermieden werden. Stillstandszeiten und Produktionsstillstände werden minimiert.

Insbesondere ermöglichst das erfindungsgemäße Überwachungssystem eine möglichst präzise Vorausplanung der Instandhaltung, wodurch insbesondere auch unerwartete Ausfälle von Greifzangen vermieden werden können. Mit dem Wissen darüber, wann welche Greifzange 1 gewartet werden muss, lassen sich Ressourcen für Instandhaltungsarbeiten wie Ersatzteile oder Personen besser planen. Zudem kann die Verfügbarkeit der Anlage, in welcher die Greifzange 1 zum Einsatz kommt, erhöht werden, und zwar indem "ungeplante Stopps" in immer kürzere und häufigere "geplante Stopps" umgewandelt werden.

Weitere Vorteile ergeben sich in einer längeren Lebensdauer der Greifzangen und Roboterarme, eine erhöhte Anlagensicherheit, weniger Unfälle mit negativen Auswirkungen auf die Umwelt und ein optimiertes Ersatzteil-Handling.

Das Überwachungssystem ermöglicht insbesondere eine vorausschauende Instanthaltung, und zwar indem es sich auf den tatsächlichen Zustand der Greifzange 1 und nicht auf die durchschnittliche oder erwartete Lebensdauer stützt, um vorauszusagen, wann eine Wartung erforderlich ist.

In einer Weiterbildung der erfindungsgemäßen Lösung eignet sich der Schwingungssensor 30 auch dazu, eine Aussage über Gegenstände treffen zu können, die von der Greifzange 1 gegriffen wurden. Dies betrifft insbesondere das Material, die Größe und/oder das Gewicht der Gegenstände sowie die Frage, ob ein Gegenstand richtig von den Greifbacken der Greifzange 1 gegriffen wurde.

Das Schwingungsspektrum zeigt insbesondere dann die Größe des gegriffenen Gegenstandes auf, und zwar wann im Vergleich zu dem im Lernmodus aufgenommene Schwingungsspektrum im gegriffenen Zustand der Signalpeaks auftritt.

In einer Weiterbildung der erfindungsgemäßen Lösung eignet sich der Schwingungssensor 30 auch zum Erfassen, ob die Greifzange 1 mit einem Gegenstand, wie beispielsweise mit einer anderen Greifzange, kollidiert ist.

## Patentansprüche

1. Verfahren zum Überwachen der Funktionsweise einer Greifzange (1), insbesondere einer pneumatisch betätigten Greifzange (1), wobei die Greifzange (1) folgendes aufweist:
- ein Gehäuse (2), in welchem ein vorzugsweise pneumatisch betätigbarer Linearantrieb (6) ausgebildet ist; und
- eine erste und eine zweite Greifbacke (10, 20), die jeweils um eine Drehachse (D1, D2) relativ zu dem Gehäuse (2) verschwenkbar gelagert sind,
wobei die erste und zweite Greifbacke (10, 20) mit dem Linearantrieb (6) derart gekoppelt sind, dass eine mit dem Linearantrieb (6) erzeugte Linearbewegung in eine Verschwenkbewegung jeweils der ersten und zweiten Greifbacke (10, 20) in einer Öffnungs- oder Schließrichtung der Greifbacken (10, 20) umgewandelt wird,
wobei der Greifzange (1) ein System zur Schwingungsmessung zugeordnet ist, welches einen Beschleunigungssensor (30) aufweist, welcher ausgelegt ist, die Beschleunigung einer Greifbacke (10, 20) beim Betätigen der Greifzange (1) zu messen,
**dadurch gekennzeichnet, dass**
mit Hilfe mindestens einer Schwingungsmessung über eine vorab festgelegte oder festlegbare Zeitperiode ein Schwingungsspektrum der Greifzange (1) als Beschleunigungszeitsignal aufgenommen und das aufgenommene Schwingungsspektrum analysiert wird,
wobei die mindestens eine Schwingungsmessung über eine Zeitperiode durchgeführt wird, in welcher die Greifzange (1) mindestens einmal geschlossen wird, sodass das aufgenommene Schwingungsspektrum ein für den Schließvorgang der Greifzange (1) charakteristisches Spektrum ist.

2. Verfahren nach Anspruch 1,
wobei zum Analysieren des aufgenommenen Schwingungsspektrums aus dem aufgenommenen Schwingungsspektrum wenigstens ein Schwingungsmuster und/oder wenigstens eine Schwingungsamplitude extrahiert werden/wird, wobei das mindestens eine extrahierte Schwingungsmuster mit mindestens einem Bezugsmuster verglichen wird und/oder wobei die mindestens eine Schwingungsamplitude mit mindestens einem Bezugswert verglichen wird.

3. Verfahren nach Anspruch 1 oder 2,
wobei mit Hilfe der mindestens einen Schwingungsmessung ein Spektrum einer durch Betätigung der Greifzange (1) indizierten Eigenschwingung der Greifzange (1) aufgenommen wird.

4. Verfahren nach einem der Ansprüche 1 bis 3,
wobei mit Hilfe der mindestens einen Schwingungsmessung ein bei Betätigung der Greifzange (1) induziertes Schwingungsspektrum der Greifzange (1) aufgenommen wird, und zwar in einer Situation, in welcher bei Betätigung der Greifzange (1) mit der Greifzange (1) kein Gegenstand gegriffen wird.

5. Verfahren nach einem der Ansprüche 1 bis 4,
wobei mit Hilfe der mindestens einen Schwingungsmessung ein bei Betätigung der Greifzange (1) induziertes Schwingungsspektrum der Greifzange (1) aufgenommen wird, und zwar in einer Situation, in welcher bei Betätigung der Greifzange (1) mit der Greifzange (1) ein Gegenstand gegriffen wird, wobei das Verfahren ferner den Verfahrensschritt des Ermittelns der Art des von der Greifzange (1) gegriffenen Gegenstandes und/oder den Verfahrensschritt des Ermittelns der Art des Greifvorganges der Greifzange (1) aufweist.

6. Verfahren nach einem der Ansprüche 1 bis 5,
wobei die Greifzange (1) eine pneumatisch betätigbare Greifzange (1) ist, und zwar von dem Typ, bei welchem durch Anlegen eines Betätigungsdruckes an der Greifzange (1) diese betätigt wird, wobei das Schwingungsspektrum der Greifzange (1) bei einem unbekannten Wert, insbesondere bei einem unbekannten Ist-Wert, eines an der Greifzange (1) anliegenden Betätigungsdruckes aufgenommen wird, und wobei das Verfahren ferner den Verfahrensschritt des quantitativen oder qualitativen Ermittelns bei Betätigung der Greifzange (1) an der Greifzange (1) anliegenden Ist-Wertes des Betätigungsdruckes aufweist.

7. Verfahren nach einem der Ansprüche 1 bis 6,
wobei zum Analysieren des aufgenommenen Schwingungsspektrums mindestens ein beim Schließ- und/oder Öffnungsvorgang der Greifzange (1) im Schwingungsspektrum auftretender Signalpeak und/oder ein beim Schließ- und/oder Öffnungsvorgang der Greifzange (1) im Schwingungsspektrum auftretendes Grundrauschen ausgewertet werden/wird.

8. Verfahren nach einem der Ansprüche 1 bis 7,
wobei eine Trennschärfe von beim Schließ- und/oder Öffnungsvorgang der Greifzange (1) im Schwingungsspektrum auftretenden Signalpeaks ermittelt und als Verschleißzustandsindikator der Greifzange (1) herangezogen wird.

9. Verfahren nach einem der Ansprüche 1 bis 8,
wobei die Scheitelhöhe mindestens eines bei einem Schließ- und/oder Öffnungsvorgang der Greifzange (1) im Schwingungsspektrum auftretenden Signalpeaks und/oder die Fläche unter mindestens eines bei einem Schließ- und/oder Öffnungsvorgang der Greifzange (1) im Schwingungsspektrum auftretenden Signalpeaks und/oder die Fläche unter einem vorab festgelegten oder festlegbaren Bereich eines bei einem Schließ- und/oder Öffnungsvorgang der Greifzange (1) im Schwingungsspektrum auftretenden Grundrauschens ermittelt werden/wird und als Verschleißzustandsindikator der Greifzange (1) herangezogen werden/wird.

10. Verfahren nach einem der Ansprüche 1 bis 9,
wobei bei Inbetriebnahme, insbesondere bei einer erstmaligen Inbetriebnahme der Greifzange (1), in einem Lernmodus mindestens ein charakteristisches Schwingungsprofil beim Öffnen und/oder Schließen der Greifzange (1) aufgenommen wird und anhand des im Lernmodus aufgenommenen Schwingungsprofils entsprechende Alarmschwellen festgelegt werden.

11. Greifzange (1), insbesondere pneumatisch betätigte Greifzange (1), wobei die Greifzange (1) folgendes aufweist:
- ein Gehäuse (2), in welchem ein vorzugsweise pneumatisch betätigbarer Linearantrieb (6) ausgebildet ist; und
- eine erste und eine zweite Greifbacke (10, 20), die jeweils um eine Drehachse (D1, D2) relativ zu dem Gehäuse (2) verschwenkbar gelagert sind,
wobei die erste und zweite Greifbacke (10, 20) mit dem Linearantrieb (6) derart gekoppelt sind, dass eine mit dem Linearantrieb (6) erzeugte Linearbewegung in eine Verschwenkbewegung jeweils der ersten und zweiten Greifbacke (10, 20) in einer Öffnungs- oder Schließrichtung der Greifbacken (10, 20) umgewandelt wird,
**dadurch gekennzeichnet, dass**
der Greifzange (1) ein System zur Schwingungsmessung zugeordnet ist, welches einen Beschleunigungssensor (30) aufweist, welcher ausgelegt ist, die Beschleunigung einer Greifbacke (10, 20) beim Betätigen der Greifzange (1) zu messen, wobei der Greifzange (1) ferner eine Auswerteeinrichtung (40) zugeordnet ist, welche ausgebildet ist, zur Greifzangen-Diagnose das von dem Beschleunigungssensor (30) beim Betätigen der Greifzange (1) aufgenommene Schwingungsspektrum auszuwerten, wobei das System zur Schwingungsmessung ausgeführt ist, mindestens eine Schwingungsmessung über eine Zeitperiode durchzuführen, in welcher die Greifzange (1) mindestens einmal geschlossen wird, sodass das aufgenommene Schwingungsspektrum ein für den Schließvorgang der Greifzange (1) charakteristisches Spektrum ist.

## Claims

1. A method for monitoring the operation of a gripper (1), particularly a pneumatically actuated gripper (1), wherein the gripper (1) comprises the following:
- a housing (2) in which a preferably pneumatically actuable linear drive (6) is formed; and
- a first and a second gripping jaw (10, 20), each of which being pivotably mounted about an axis of rotation (D1, D2) relative to the housing (2),
wherein the first and second gripping jaw (10, 20) are coupled to the linear drive (6) such that a linear movement produced by the linear drive (6) is converted into a pivoting movement of the first and second gripping jaw (10, 20) respectively in an opening or closing direction of the gripping jaws (10, 20), wherein a system for measuring vibrations is assigned to the gripper (1) which has an acceleration sensor (30) designed to measure the acceleration of a gripping jaw (10, 20) upon the actuation of the gripper (1),
**characterized in that**
a vibrational spectrum of the gripper (1) is recorded as an acceleration time signal by means of at least one vibration measurement over a previously defined or definable period of time and the recorded vibrational spectrum analyzed, wherein the at least one vibration measurement is performed over a period of time in which the gripper (1) is closed at least once so that the recorded vibrational spectrum is a spectrum which is characteristic of the closing operation of the gripper (1).

2. The method according to claim 1,
wherein at least one vibration pattern and/or at least one vibration amplitude is extracted from the recorded vibrational spectrum for the analyzing of the recorded vibrational spectrum, wherein the at least one extracted vibration pattern is compared to at least one reference pattern and/or wherein the at least one vibration amplitude is compared to at least one reference value.

3. The method according to claim 1 or 2,
wherein a spectrum of a natural oscillation of the gripper (1) induced by actuation of the gripper (1) is recorded by way of the at least one vibration measurement.

4. The method according to one of claims 1 to 3,
wherein a vibrational spectrum of the gripper (1) induced upon actuation of the gripper (1) is recorded by way of the at least one vibration measurement, specifically in a situation in which no object is being gripped by the gripper (1) during the gripper (1) actuation.

5. The method according to one of claims 1 to 4,
wherein a vibrational spectrum of the gripper (1) induced upon actuation of the gripper (1) is recorded by way of the at least one vibration measurement, specifically in a situation in which an object is being gripped by the gripper (1) during the gripper (1) actuation, wherein the method further comprises the method step of determining the type of object gripped by the gripper (1) and/or the method step of determining the type of gripping operation of the gripper (1).

6. The method according to one of claims 1 to 5,
wherein the gripper (1) is a pneumatically actuable gripper (1), specifically of the type in which the gripper (1) is actuated upon an actuating pressure being applied thereto, wherein the vibrational spectrum of the gripper (1) is recorded at an unknown value, in particular an unknown actual value, of an actuating pressure applied to the gripper (1), and wherein the method further comprises the method step of quantitative or qualitative determination of the actual value of the actuating pressure applied to the gripper (1) upon actuation of the gripper (1).

7. The method according to one of claims 1 to 6,
wherein at least one signal peak occurring in the vibrational spectrum during the closing and/or opening operation of the gripper (1) and/or a background emission occurring in the vibrational spectrum during the closing and/or opening operation of the gripper (1) is/are evaluated for the analyzing of the recorded vibrational spectrum.

8. The method according to one of claims 1 to 7,
wherein a selectivity of signal peaks occurring in the vibrational spectrum during the closing and/or opening operation of the gripper (1) is determined and used as an indicator of the state of wear of the gripper (1).

9. The method according to one of claims 1 to 8,
wherein the peak height of the at least one signal peak occurring in the vibrational spectrum during a closing and/or opening operation of the gripper (1) and/or the area under the at least one signal peak occurring in the vibrational spectrum during a closing and/or opening operation of the gripper (1) and /or the area under a previously defined or definable background emission range occurring in the vibrational spectrum during a closing and/or opening operation of the gripper (1) is/are determined and used as an indicator of the state of wear of the gripper (1).

10. The method according to one of claims 1 to 9,
wherein at least one characteristic vibration profile during the opening and/or closing of the gripper (1) is recorded in a learning mode at start-up, in particular initial start-up, of the gripper (1) and corresponding alarm thresholds defined on the basis of the vibration profile recorded in the learning mode.

11. A gripper (1), particularly a pneumatically actuated gripper (1), wherein the gripper (1) comprises the following:
- a housing (2) in which a preferably pneumatically actuable linear drive (6) is formed; and
- a first and a second gripping jaw (10, 20), each of which being pivotably mounted about an axis of rotation (D1, D2) relative to the housing (2),
wherein the first and second gripping jaw (10, 20) are coupled to the linear drive (6) such that a linear movement produced by the linear drive (6) is converted into a pivoting movement of the first and second gripping jaw (10, 20) respectively in an opening or closing direction of the gripping jaws (10, 20),
**characterized in that**
a system for measuring vibrations is assigned to the gripper (1) which has an acceleration sensor (30) designed to measure the acceleration of a gripping jaw (10, 20) upon the actuation of the gripper (1), wherein an evaluation device (40) is further assigned to the gripper (1) which is designed to evaluate the vibrational spectrum recorded by the acceleration sensor (30) during the actuation of the gripper (1) for the gripper diagnosis, wherein the system for measuring vibrations is designed to perform at least one vibration measurement over a period of time in which the gripper (1) is closed at least once so that the recorded vibrational spectrum is a spectrum which is characteristic of the closing operation of the gripper (1).

## Revendications

1. Procédé de surveillance du fonctionnement d'une pince de préhension (1), en particulier d'une pince de préhension (1) à actionnement pneumatique, la pince de préhension (1) comprenant :
- un boîtier (2) dans lequel est réalisé un entraînement linéaire (6) de préférence à actionnement pneumatique ; et
- une première et une deuxième mâchoire de préhension (10, 20), qui sont montées chacune de manière à pouvoir pivoter autour d'un axe de rotation (D1, D2) par rapport au boîtier (2),
la première et la deuxième mâchoire de préhension (10, 20) étant couplées à l'entraînement linéaire (6) de telle sorte qu'un mouvement linéaire généré par l'entraînement linéaire (6) est transformé en un mouvement de pivotement respectif de la première et de la deuxième mâchoire de préhension (10, 20) dans une direction d'ouverture ou de fermeture des mâchoires de préhension (10, 20),
un système de mesure des vibrations étant associé à la pince de préhension (1), lequel présente un capteur d'accélération (30) conçu pour mesurer l'accélération d'une mâchoire de préhension (10, 20) lors de l'actionnement de la pince de préhension (1),
**caractérisé en ce que**
un spectre de vibrations de la pince de préhension (1) est enregistré sous forme de signal de temps d'accélération à l'aide d'au moins une mesure de vibrations sur une période de temps prédéfinie ou prédéfinissable, et le spectre de vibrations enregistré est analysé,
ladite au moins une mesure des vibrations est effectuée sur une période de temps pendant laquelle la pince de préhension (1) est fermée au moins une fois, de sorte que le spectre de vibrations enregistré est un spectre caractéristique de l'opération de fermeture de la pince de préhension (1).

2. Procédé selon la revendication 1,
dans lequel, pour analyser le spectre de vibrations enregistré, au moins un motif de vibrations et/ou au moins une amplitude de vibrations est/sont extrait(e)(s) du spectre de vibrations enregistré, ledit au moins un motif de vibrations extrait étant comparé à au moins un motif de référence et/ou ladite au moins une amplitude de vibrations étant comparée à au moins une valeur de référence.

3. Procédé selon la revendication 1 ou 2,
dans lequel, à l'aide de ladite au moins une mesure des vibrations, un spectre d'une vibration propre de la pince de préhension (1), induite par l'actionnement de la pince de préhension (1), est enregistré.

4. Procédé selon l'une des revendications 1 à 3,
dans lequel, à l'aide de ladite au moins une mesure des vibrations, un spectre de vibrations de la pince de préhension (1), induit lors de l'actionnement de la pince de préhension (1), est enregistré, et ce dans une situation dans laquelle aucun objet n'est saisi par la pince de préhension (1) lors de l'actionnement de la pince de préhension (1).

5. Procédé selon l'une des revendications 1 à 4,
dans lequel, à l'aide de ladite au moins une mesure des vibrations, un spectre de vibrations de la pince de préhension (1), induit lors de l'actionnement de la pince de préhension (1), est enregistré, et ce dans une situation dans laquelle un objet est saisi par la pince de préhension (1) lors de l'actionnement de la pince de préhension (1), le procédé comprenant en outre l'étape de détermination du type d'objet saisi par la pince de préhension (1) et/ou l'étape de détermination du type d'opération de saisie de la pince de préhension (1).

6. Procédé selon l'une des revendications 1 à 5,
dans lequel la pince de préhension (1) est une pince de préhension (1) à actionnement pneumatique, du type dans lequel, en appliquant une pression d'actionnement à la pince de préhension (1), celle-ci est actionnée, le spectre de vibrations de la pince de préhension (1) étant enregistré à une valeur inconnue, en particulier à une valeur réelle inconnue, d'une pression d'actionnement appliquée à la pince de préhension (1), et le procédé comprend en outre l'étape de détermination quantitative ou qualitative de la valeur réelle de la pression d'actionnement appliquée à la pince de préhension (1) lors de l'actionnement de la pince de préhension (1).

7. Procédé selon l'une des revendications 1 à 6,
dans lequel, pour analyser le spectre de vibrations enregistré, au moins un pic de signal apparaissant dans le spectre de vibrations lors de l'opération de fermeture et/ou d'ouverture de la pince de préhension (1) et/ou un bruit de fond apparaissant dans le spectre de vibrations lors de l'opération de fermeture et/ou d'ouverture de la pince de préhension (1) est/sont évalué(s).

8. Procédé selon l'une des revendications 1 à 7,
dans lequel un pouvoir de discrimination des pics de signal apparaissant dans le spectre de vibrations lors de l'opération de fermeture et/ou d'ouverture de la pince de préhension (1) est déterminé et utilisé comme indicateur d'état d'usure de la pince de préhension (1).

9. Procédé selon l'une des revendications 1 à 8,
dans lequel la hauteur de crête d'au moins un pic de signal apparaissant dans le spectre de vibrations lors d'une opération de fermeture et/ou d'ouverture de la pince de préhension (1) et/ou la superficie en dessous d'au moins un pic de signal apparaissant dans le spectre de vibrations lors d'une opération de fermeture et/ou d'ouverture de la pince de préhension (1) et/ou la superficie en dessous d'une plage prédéfinie ou prédéfinissable d'un bruit de fond apparaissant dans le spectre de vibrations lors d'une opération de fermeture et/ou d'ouverture de la pince de préhension (1) est/sont déterminée(s) et est/sont utilisée(s) comme indicateur d'état d'usure de la pince de préhension (1).

10. Procédé selon l'une des revendications 1 à 9,
dans lequel, lors de la mise en service, en particulier lors d'une première mise en service de la pince de préhension (1), dans un mode d'apprentissage, au moins un profil de vibrations caractéristique pendant l'ouverture et/ou la fermeture de la pince de préhension (1) est enregistré, et des seuils d'alarme correspondants sont fixés à l'aide du profil de vibrations enregistré dans le mode d'apprentissage.

11. Pince de préhension (1), en particulier pince de préhension (1) à actionnement pneumatique, la pince de préhension (1) présentant ce qui suit :
- un boîtier (2) dans lequel est réalisé un entraînement linéaire (6) de préférence à actionnement pneumatique ; et
- une première et une deuxième mâchoire de préhension (10, 20), qui sont montées chacune de manière à pouvoir pivoter autour d'un axe de rotation (D1, D2) par rapport au boîtier (2),
la première et la deuxième mâchoire de préhension (10, 20) étant couplées à l'entraînement linéaire (6) de telle sorte qu'un mouvement linéaire généré par l'entraînement linéaire (6) est transformé en un mouvement de pivotement respectif de la première et de la deuxième mâchoire de préhension (10, 20) dans une direction d'ouverture ou de fermeture des mâchoires de préhension (10, 20),
**caractérisé en ce que**
un système de mesure des vibrations est associé à la pince de préhension (1), lequel présente un capteur d'accélération (30) conçu pour mesurer l'accélération d'une mâchoire de préhension (10, 20) lors de l'actionnement de la pince de préhension (1), un dispositif d'évaluation (40) étant en outre associé à la pince de préhension (1), qui est réalisé pour évaluer le spectre de vibrations, enregistré par le capteur d'accélération (30) lors de l'actionnement de la pince de préhension (1), pour le diagnostic de la pince de préhension,
le système de mesure des vibrations étant conçu pour réaliser au moins une mesure des vibrations sur une période de temps pendant laquelle la pince de préhension (1) est fermée au moins une fois, de sorte que le spectre de vibrations enregistré est un spectre caractéristique de l'opération de fermeture de la pince de préhension (1).
